# EUROPEAN PATENT APPLICATION

(11) **EP 3 957 955 A2**
(43) Date of publication of application: **23.02.2022**
(21) Application number: 21206799.5
(22) Date of filing: 05.11.2021
(51) Int. Cl.: G01C 21/28

(54) **VEHICLE LOCATING METHOD AND APPARATUS, ELECTRONIC DEVICE, STORAGE MEDIUM AND COMPUTER PROGRAM PRODUCT**

(30) Priority: 15.12.2020 CN 202011476548
(71) Applicant: Apollo Intelligent Connectivity (Beijing) Technology Co., Ltd., Beijing 100176 (CN)
(72) Inventor: LI,, Yinghui, BEIJING, 100176 (CN); WU,, Junfa, BEIJING, 100176 (CN); HUANG,, Shenghui, BEIJING, 100176 (CN); HE,, Gang, BEIJING, 100176 (CN)
(74) Representative: Brevalex

(57) **Abstract**

A vehicle locating method and apparatus, an electronic device, a storage medium and a computer program product are provided, and relate to the technical field of intelligent transportation. The method includes: acquiring an image of a current road within an area in which a target vehicle is currently located, and acquiring current lane related information within the area in which the target vehicle is currently located from a map application; determining a current road recognition result based on the image of the current road; and determining a lane in which the target vehicle is currently located based on at least one of the current road recognition result and the current lane related information, and taking the lane in which the target vehicle is currently located as the current lane location result for the target vehicle.

## Description

### TECHNICAL FIELD

The present disclosure relates to the technical field of computer technology. The present disclosure particularly relates to the technical field of intelligent transportation.

### BACKGROUND

In the technical field of intelligent transportation, lane-level locating of vehicles is one of the main issues currently concerned. In the related art, high-precision locating is performed based on lidar and high-precision maps, or lane-level locating is performed by using high-precision locating technology. High computing power at the vehicle end is required, and the real-time performance and accuracy are not high. Therefore, how to perform lane locating in real time and accurately is a problem that needs to be solved.

### SUMMARY

The present disclosure provides a vehicle locating method, an apparatus, an electronic device, a storage medium and a computer program product.

According to a first aspect of the present disclosure, a vehicle locating method is provided and includes:
acquiring an image of a current road within an area in which a target vehicle is currently located, and acquiring current lane related information within the area in which the target vehicle is currently located from a map application;
determining a current road recognition result based on the image of the current road; and
determining a lane in which the target vehicle is currently located based on at least one of the current road recognition result and the current lane related information, and taking the lane in which the target vehicle is currently located as a current lane location result for the target vehicle.

According to a second aspect of the present disclosure, a vehicle locating apparatus is provided and includes:
an image acquisition module, configured for acquiring an image of a current road within an area in which a target vehicle is currently located;
a map information acquisition module, configured for acquiring current lane related information within the area in which the target vehicle is currently located from a map application;
an engine module, configured for determining a current road recognition result based on the image of the current road; and
a synchronous fusion module, configured for determining a lane in which the target vehicle is currently located based on at least one of the current road recognition result and the current lane related information, and taking the lane in which the target vehicle is currently located as a current lane location result for the target vehicle.

According to a third aspect of the present disclosure, an electronic device is provided and includes:
at least one processor; and
a memory communicatively coupled to the at least one processor, wherein
the memory stores instructions executable by the at least one processor to enable the at least one processor to perform the abovementioned method.

According to a fourth aspect of the present disclosure, there is provided a non-transitory computer readable storage medium storing computer instructions for causing a computer to perform the abovementioned method.

According to a fifth aspect of the present disclosure, there is provided a computer program product including a computer program which, when executed by a processor, implements the abovementioned method.

With the technical solution of the present disclosure, the current lane location result for the target vehicle can be determined based on the image of the current road within the area in which the target vehicle is currently located and the current lane related information within the area in which the target vehicle is currently located obtained in the map application result. In this way, the information of the map application and the image of the current road can be fused for lane locating, which improves the locating accuracy. Moreover, the real-time processing based on the image of the current road and current lane related information can ensure the real-time performance of the lane locating.

It is to be understood that the contents in this section are not intended to identify the key or critical features of the embodiments of the present disclosure, and are not intended to limit the scope of the present disclosure. Other features of the present disclosure will become readily apparent from the following description.

### BRIEF DESCRIPTION OF THE DRAWINGS

The drawings are included to provide a better understanding of the present disclosure and are not to be construed as limiting the present disclosure, in which:
FIG. 1 is a schematic flowchart of a vehicle locating method according to an embodiment of the present disclosure;
FIG. 2 is a schematic diagram of vehicle locating according to an embodiment of the present disclosure;
FIG. 3 is a first schematic diagram of composition structure of a vehicle locating device according to an embodiment of the present disclosure;
FIG. 4 is a second schematic diagram of composition structure of a vehicle locating device according to an embodiment of the present disclosure; and
FIG. 5 is a block diagram of an electronic device used to implement an embodiment of the present disclosure.

### DETAILED DESCRIPTION

Reference will now be made in detail to the exemplary embodiments of the present disclosure, examples of which are illustrated in the accompanying drawings, where the various details of the embodiments of the present disclosure are included to facilitate understanding and are to be considered as exemplary only. Accordingly, those skilled in the art should appreciate that various changes and modifications can be made to the embodiments described herein without departing from the scope and spirit of the present disclosure. Also, descriptions of well-known functions and structures are omitted from the following description for clarity and conciseness.

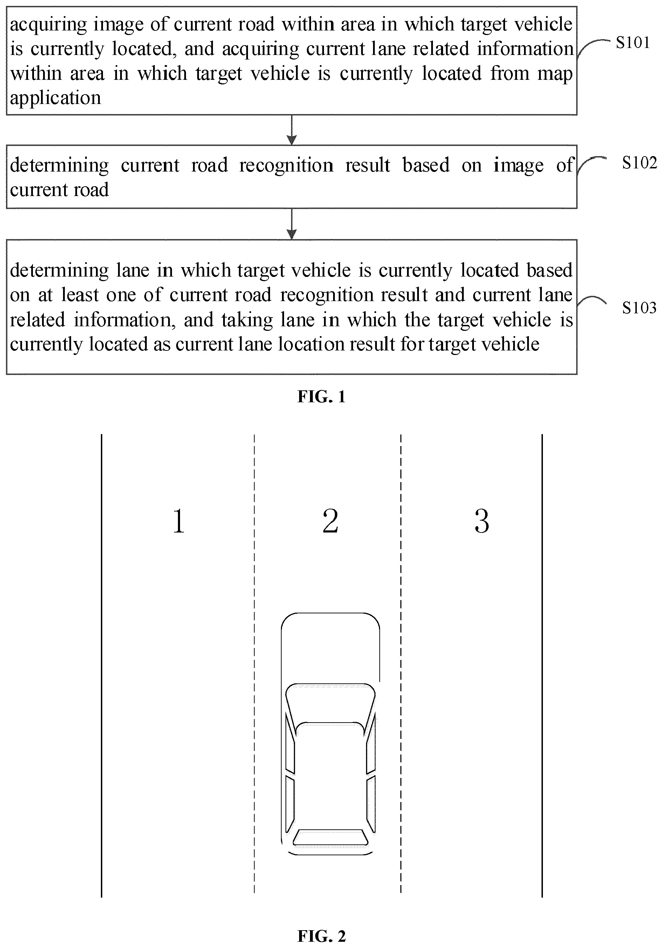

An embodiment of the present disclosure provides a vehicle locating method, as shown in FIG. 1, the method includes:

S 101, acquiring an image of a current road within an area in which a target vehicle is currently located, and acquiring current lane related information within the area in which the target vehicle is currently located from a map application;

S102, determining a current road recognition result based on the image of the current road; and

S103, determining a lane in which the target vehicle is currently located based on at least one of the current road recognition result and the current lane related information, and taking the lane in which the target vehicle is currently located as the current lane location result for the target vehicle.

This embodiment may be applied to a device with a data processing function, for example, it may be a device with a data processing function installed in an autonomous vehicle, or it may be an electronic device that can be connected to the vehicle.

The image of the current road within the area in which the target vehicle is currently located may be the image of the current road within the area in which the target vehicle is currently located that is collected in real time by an image collection apparatus installed on the target vehicle.

Wherein, the image collection device may be a camera; the installation location of the image collection apparatus may be in front of the target vehicle.

The area in which the target vehicle is currently located is: an area containing the current location of the target vehicle. Exemplarily, the area in which the target vehicle is currently located may be an area that may have a length of 200 meters in an extension line extending in the travel direction of the target vehicle from the current location of the target vehicle and a width of 100 meters. Alternatively, the size of the area in which the target vehicle is currently located may be related to the capture range of the image collection apparatus, that is, the camera. For example, the camera may be of a wide-angle acquisition, and the area in which the target vehicle is currently located may have a larger range. In addition, the size of the area in which the target vehicle is currently located can also be related to the installation angle of the camera. For example, in a case that the camera is set horizontally, that is, the camera horizontally shoots the road surface in front of the target vehicle, the collected image covers a larger range of the road surface, and correspondingly, the range of the area in which the target vehicle is currently located can also be larger. In a case that the camera is arranged at an angle with respect to the horizontal line, for example, arranged toward the ground, the collected image will cover a small size of the road surface, and correspondingly, the area in which the target vehicle is currently located will also have a small size.

The acquiring the current lane related information within the area in which the target vehicle is currently located from the map of the advanced driving assistance system may include: acquiring the current lane related information within the area in which the target vehicle is currently located from the map application based on the current location of the target vehicle.

Wherein, the current lane related information within the area in which the target vehicle is currently located may include lane number change information and road-surface-arrow-sequence information. Or else, other information can be included, which is not exhaustive here.

The current locating of the target vehicle may be obtained through a locating module, which is a locating module installed on the target vehicle; the locating module may include a GPS module. That is, the current location detected by the GPS module in real time can be used as the current location of the target vehicle.

The map application may specifically be an Advanced Driving Assistance System (ADAS) map. The acquiring the current lane related information within the area in which the target vehicle is currently located from the map application may specifically be: acquiring the current lane related information within the area in which the target vehicle is currently located from the ADAS map based on the current location of the target vehicle.

Here, the area range of the current lane related information obtained from the ADAS map may be larger than the area in which the target vehicle is currently located, and the current lane related information obtained from the ADAS map may be used as the current lane related information in the initial area range, and the current lane related information in the initial area range is further combined with the current location of the target vehicle, to determine the current lane related information of the target vehicle within the area in which the target vehicle is currently located. Alternatively, it may not be processed, and all current lane related information within the initial area range is used for subsequent processing, but only the current lane related information within the area in which the target vehicle is currently located may be used in processing.

It should be understood that the acquiring the image of the current road within the area in which the target vehicle is currently located, and the acquiring the current lane related information within the area in which the target vehicle is currently located from the map application, both can be performed simultaneously. That is, while the target vehicle is collecting the image of the current road within the area in which the target vehicle is currently located in real time, the current lane related information within the area in which the target vehicle is currently located may be acquired from the ADAS map based on the current location of the target vehicle.

The determining the current road recognition result based on the image of the current road may be executed by an apparatus with data processing functions, or may be executed by a cloud server, or may be partly executed by the apparatus with data processing functions and partly executed by the cloud server.

The current road recognition result may include at least one of lane line detection result, diversion line recognition result, lane division line recognition result, road edge recognition result, road-surface-arrow-sequence recognition result, and lane change event.

In the determining the lane in which the target vehicle is currently located based on the lane line detection result and the diversion line recognition result, the lane in which the target vehicle is currently located may be determined based on the current road recognition result;
or, the lane in which the target vehicle is currently located is determined based on the current lane related information;
or, the lane in which the target vehicle is currently located is determined based on the current road recognition result and the current lane related information.

The current lane may be the number of the current lane. For example, there are 4 lanes on the current road, which are respectively numbered from lane No.1 to lane No.4. The current lane may be lane No.2 of which "2" may be the number of the current lane. This is only an exemplary description, in actual processing, the number of the lane may be different, and is not limited to those in this example.

It can be seen that by adopting the above solution, the current lane location result for the target vehicle can be determined based on the image of the current road within the area in which the target vehicle is currently located and the current lane related information within the area in which the target vehicle is currently located acquired in the map application. In this way, the information of the map application and the image of the current road can be fused for lane locating, which improves the locating accuracy. Moreover, the real-time processing based on the image of the current road and the current lane related information can ensure the real-time performance of the lane locating.

The determining the lane in which the target vehicle is currently located based on at least one of the current road recognition result and the current lane related information may include a plurality of processing manners, which will be described separately below.

In a first manner, the determining the lane in which the target vehicle is currently located based on at least one of the current road recognition result and the current lane related information, includes at least one of:
determining the lane in which the target vehicle is currently located based on a lane line detection result and a diversion line recognition result in a case that the current road recognition result contains the diversion line recognition result; and
determining the lane in which the target vehicle is currently located based on the lane line detection result and an opposing-lanes-dividing line recognition result in a case that the current road recognition result contains the opposing-lanes-dividing line recognition result.

The diversion line recognition result may be an image indicating the diversion line in the road. It should be pointed out that, in addition to the image indicating the diversion line in the road, the diversion line recognition result can also include the relative location of the diversion line in the road in the image, or the absolute location in the world coordinate system. The method for obtaining the absolute location in the world coordinate system is not limited in this embodiment. Here, the diversion line recognition result may be obtained at local, or may be sent by the cloud server. Local refers to the aforementioned apparatus with data processing function.

The lane line detection result may be included in the current road recognition result. Here, the lane line detection result can be obtained at local, which local refers to the aforementioned apparatus with data processing function; that is, when the image of the current road is obtained in real time, the image of the current road is analyzed in real time in the local apparatus with data processing function to obtain the lane line detection result. Alternatively, the lane line detection result may also be obtained through analysis by the cloud server.

The lane line detection result may be extracted from the image of the current road, or obtained by analyzing the image of the current road. The lane line detection result may be an image indicating the lane line in the road. It should be pointed out that in addition to the image indicating the lane line in the road, the lane line detection result may also include the relative location of the lane line in the image or the absolute location in the world coordinate system. The method for obtaining the absolute location in the world coordinate system is not limited in this embodiment.

The opposing-lanes-dividing line recognition result may be an image indicating the opposing-lanes-dividing line in the road. It should be pointed out that in addition to the image indicating the opposing-lanes-dividing line in the road, the opposing-lanes-dividing line recognition result may also include the relative location of the opposing-lanes-dividing line in the road in the image, or the absolute location in the world coordinate system. The method for obtaining the absolute location in the world coordinate system is not limited in this embodiment. The opposing-lanes-dividing line recognition result may be obtained at local, or may be sent by the cloud server. Local refers to the aforementioned apparatus with data processing function.

Here, the opposing-lanes-dividing line may be a double yellow line or a single yellow line in the road.

Specifically, it may include:
judging whether or not the current road recognition result contains the diversion line recognition result and/or the opposing-lanes-dividing line recognition result; if not, judging that the current road recognition result contains a road edge recognition result;
if yes, determining the lane in which the target vehicle is currently located based on the lane line detection result and the diversion line recognition result, and/or determining the lane in which the target vehicle is currently located based on the lane line detection result and the opposing-lanes-dividing line recognition result.

The determining the lane in which the target vehicle is currently located based on the lane line detection result and the diversion line recognition result may specifically include: determining the lane in which the target vehicle is currently located based on location comparison of the lane line in the lane line detection result to the diversion line in the diversion line recognition result.

The determining the lane in which the target vehicle is currently located based on the lane line detection result and the opposing-lanes-dividing line recognition result may specifically include: determining the lane in which the target vehicle is currently located based on location comparison of the lane line in the lane line detection result to the opposing-lanes-dividing line in the opposing-lanes-dividing line recognition result.

For one example, in a case that the diversion line in the diversion line recognition result is located on the right, and the distance between the target lane line in the lane line detection result and the diversion line is less than a first preset distance, the lane in which the target vehicle is currently located is determined to be the rightmost lane, the number of the lane can be No.4, or the number of the lane can be determined to be No.1 according to the actual situation, which is related to the design of the actual lane number and is not limited to those in this embodiment.

The target lane line may be the lane line of the lane in which the target vehicle is currently located.

For another example, in a case that the opposing-lanes-dividing line in the opposing-lanes-dividing line recognition result is located on the left, and the distance between the target lane line in the lane line detection result and the opposing-lanes-dividing line is less than the first preset distance, it is determined that the lane in which the target vehicle is currently located is the leftmost lane. The number of the lane can be No. 1, or the number of the lane can be determined to be another number according to the actual situation, which is the design of the actual lane number and is not limited to those in this embodiment.

The above-mentioned first preset distance is related to actual road conditions, e.g., it may be half a lane width and so on.

It should be understood that the foregoing only illustrates the manner of determining the current lane based on the first preset distance in combination with the opposing-lanes-dividing line or the diversion line, and the actual processing may include more other preset distances, such as a second preset distance, a third preset distance, etc., the second preset distance may be one lane width, the third preset distance may be two lane widths, etc. The specific values are determined according to the actual situation.

It can be seen that by adopting the above solution, the lane in which the target vehicle is currently located can be obtained based on the current road recognition result for the image of the current road, so that real-time processing can be made based on the image of the current road and current lane related information, which ensures real-time and accuracy of the lane locating.

In a second manner, the determining the lane in which the target vehicle is currently located based on at least one of the current road recognition result and the current lane related information, includes at least one of:

determining a distance between a target lane line and a road edge based on the target lane line and the road edge recognition result in a case that the current road recognition result contains the road edge recognition result; and determining the lane in which the target vehicle is currently located based on the distance between the target lane line and the road edge.

The road edge recognition result may be an image indicating the road edge in the road. It should be pointed out that, in addition to the image indicating the road edge in the road, the road edge recognition result can also include the relative location of the road edge in the road in the image, or the absolute location in the world coordinate system. The method for obtaining the absolute location in the world coordinate system is not limited in this embodiment. Here, the road edge recognition result may be obtained at local, or may be sent by the cloud server. Local refers to the aforementioned apparatus with data processing function.

The acquisition and description of the lane line detection result are the same as those in the foregoing first manner, and no repeated description will be made.

The target lane line may be a lane line(s) of the lane in which the target vehicle is currently located, or referred to as a lane boundary line. In the lane line detection results detected from the image of the current road, two lane lines closest to the target vehicle can be determined as the target lane line. In addition, there may be more ways to determine the target lane line, which is not exhaustive in this embodiment.

Specifically, it may include:
judging whether or not the current road recognition result contains the diversion line recognition result and/or the opposing-lanes-dividing line recognition result; if yes, it will be processed based on the first manner, which will not repeatedly described herein;
if not, judging that the current road recognition result contains a road edge recognition result;
determining the distance between a target lane line and the road edge based on the target lane line and the road edge recognition result in the lane line detection result for the image of the current road in a case that the current road recognition result contains the road edge recognition result; and determining the lane in which the target vehicle is currently located based on the distance between the target lane line and the road edge.

The determining the lane in which the target vehicle is currently located based on the distance between the target lane line and the road edge may specifically include:
determining the lane in which the target vehicle is currently located based on the distance between the target lane line and the road edge as well as distance threshold range.

The distance threshold range may include: less than one lane width is a threshold range, one lane width to two lane widths is a threshold range, two lane widths to three lane widths is a threshold range. Or, it can be other threshold ranges, which are not exhaustive here.

For example, in a case that the distance between the target lane line and the road edge is less than half the lane width, it can be determined that the lane in which the target vehicle is currently located is the rightmost lane, and the number of the lane may be No.4, or the number of the lane can be determined to be No.1 according to the actual situation, which is related to the design of the actual lane number and is not limited in this embodiment.

It can be seen that by adopting the above solution, the lane in which the target vehicle is currently located can be obtained based on the road edge recognition result contained in the current road recognition result, so that real-time processing can be made based on the image of the current road and current lane related information, which ensures real-time and accuracy of the lane locating.

In a third manner, the determining the lane in which the target vehicle is currently located based on at least one of the current road recognition result and the current lane related information, includes at least one of:
determining the lane in which the target vehicle is currently located based on a road-surface-arrow-sequence recognition result and road-surface-arrow-sequence information contained in the current lane related information in a case that the current road recognition result contains the road-surface-arrow-sequence recognition result.

The road-surface-arrow-sequence recognition result may be an image indicating the road surface arrow sequence in the road. It should be pointed out that, in addition to the image indicating the road surface arrow sequence in the road, the road-surface-arrow-sequence recognition result can also include the relative location of the road surface arrow sequence in the road in the image, or the absolute location in the world coordinate system. The method for obtaining the absolute location in the world coordinate system is not limited in this embodiment. Here, the road-surface-arrow-sequence recognition result may be obtained at local, or may be sent by the cloud server. Local refers to the aforementioned apparatus with data processing function.

The road-surface-arrow-sequence information included in the current lane related information may be obtained from the ADAS map.

Specifically, it may include:
judging whether or not the current road recognition result contains the diversion line recognition result and/or the opposing-lanes-dividing line recognition result; if yes, it will be processed based on the first manner, which will not repeatedly described herein;
if not, judging that the current road recognition result contains a road edge recognition result; in a case that the current road recognition result contains the road edge recognition result, it will be processed based on the second manner, which will not repeatedly described herein;
in a case that the current road recognition result does not contain the road edge recognition result, determining the lane in which the target vehicle is currently located based on the road-surface-arrow-sequence recognition result and road-surface-arrow-sequence information contained in the current lane related information.

The determining the lane in which the target vehicle is currently located based on the road-surface-arrow-sequence recognition result and road-surface-arrow-sequence information contained in the current lane related information may specifically include:
matching the road-surface-arrow-sequence recognition result with the road-surface-arrow-sequence information given by the ADAS map; and in a case that a unique match can be generated, determining the lane in which the target vehicle is currently located according to the matching result.

For example, the road-surface-arrow-sequence recognition result contains relative locations corresponding to one or more road arrows in front of the target vehicle in the image. The road-surface-arrow-sequence recognition result is matched with the road-surface-arrow-sequence information. In a case that all road surface arrow images and their sequence contained in the road-surface-arrow-sequence recognition result matches the relative locations and sequence of at least some of the arrows in the road-surface-arrow-sequence information, it is determined that the two match, and then the location and shape of the arrow immediately ahead as well as its sequence in all road-surface-arrow-sequence information can be determined, thereby determining the current lane.

For example, the straight ahead arrow can be an arrow at the center of the image, and this arrow is a first arrow on the left and is a left-turning arrow; there are two arrows on the right side of the arrow, which are the left-turning arrow and the straight arrow. A unique match is generated based on the two arrows and the road-surface-arrow-sequence information, and it can be determined that the lane corresponding to the first arrow on the left is the first lane on the left based on the road-surface-arrow-sequence information, thereby determining that the lane in which the target vehicle is currently located is the first lane on the left and can be numbered as No. 1, or other values, not exhaustively listed.

It can be seen that by adopting the above solution, it is possible to locate the lane by fusing the map-related information and the recognition results of the real-time collected images according to the road-surface-arrow-sequence recognition result contained in the current road recognition result and the road-surface-arrow-sequence information obtained from the map application in the case that the current road recognition result for the image of the current road does not contain the diversion line, the opposing-lanes-dividing line and the road edge, thereby ensuring the real-time and accuracy of lane locating .

In a fourth manner, the determining the lane in which the target vehicle is currently located based on at least one of the current road recognition result and the current lane related information includes:
determining the lane in which the target vehicle is currently located based on a historical lane location result for the target vehicle and a lane change event of the target vehicle in a case that the current road recognition result contains the lane change event.

The lane change event of the target vehicle may be jointly determined based on the image of the current road and M frames of road images before the current moment, and M is an integer greater than or equal to 1.

For example, it can be determined that the lane change event is currently occurring in a case that the image of the current road has a change in the location of the lane line compared with the previous 10^{th} frame of the road image, that is, the lane line in the center of the image (namely, in the front of the vehicle) in the previous 10^{th} frame of the road image is on the left side of the image in the image of the current road.

The lane change event of the target vehicle may include indication information of the lane change direction such as right and left and/or the number of lane changes. For example, the lane change event of the target vehicle contains: right +1, which can be used to indicate that the target vehicle has changed a lane to the right.

The historical lane location result for the target vehicle may be the most recent lane location result saved by the target vehicle.

That is, in a case that the historical lane location result for the target vehicle has been determined and a lane change event occurs in the current target vehicle, the lane in which the target vehicle is currently located is calculated according to the lane change event of the target vehicle.

For example, in a case that the most recent historical lane location result is lane No. 1, and the lane change event of the target vehicle is right +1, it can be determined that the lane in which the target vehicle is currently located is a lane on the right side of lane No.1, which can be lane No.2.

Specifically, it may include:
judging whether or not the current road recognition result contains the diversion line recognition result and/or the opposing-lanes-dividing line recognition result; if yes, it will be processed based on the first manner, which will not repeatedly described herein;
if not, judging that the current road recognition result contains a road edge recognition result; in a case that the current road recognition result contains the road edge recognition result, it will be processed based on the second manner, which will not repeatedly described herein;
in a case that the current road recognition result does not contain the road edge recognition result, judging whether or not the current road recognition result contains the road-surface-arrow-sequence recognition result; in a case that the current road recognition result contains the road-surface-arrow-sequence recognition result, it will be processed based on the third manner;
in a case that the current road recognition result does not contain the road-surface-arrow-sequence recognition result, determining the lane in which the target vehicle is currently located based on the historical lane location result for the target vehicle and the lane change event of the target vehicle in a case that the current road recognition result contains the lane change event.

It can be seen that by adopting the above solution, it is possible to determine the current lane based on the lane change event determined by the image of the current road and the historical lane location result, so as to locate the lane through the recognition results of the real-time collected images, ensuring real-time and accuracy of the lane locating.

In a fifth manner, the determining the lane in which the target vehicle is currently located based on at least one of the current road recognition result and the current lane related information includes:
determining the lane in which the target vehicle is currently located based on a historical lane location result for the target vehicle and a lane number change information at the current location in a case that the current lane related information contains the lane number change information.

The lane number change information at the current location may be determined based on lane-related information acquired from the ADAS map. For example, it can be determined through the ADAS map that the number of lanes has changed at the current location, and then the lane number change information at the current location can be generated, which may specifically include: information about whether the lane number around the current location increases or decreases on the left or right side; and, it may also include the lane number increased or decreased on the left side, and/or the lane number increased or decreased on the right side.

Specifically, it may include:
judging whether or not the current road recognition result contains the diversion line recognition result and/or the opposing-lanes-dividing line recognition result; if yes, it will be processed based on the first manner, which will not repeatedly described herein;
if not, judging that the current road recognition result contains a road edge recognition result; in a case that the current road recognition result contains the road edge recognition result, it will be processed based on the second manner, which will not repeatedly described herein;
in a case that the current road recognition result does not contain the road edge recognition result, judging whether or not the current road recognition result contains the road-surface-arrow-sequence recognition result; in a case that the current road recognition result contains the road-surface-arrow-sequence recognition result, it will be processed based on the third manner;
in a case that the current road recognition result does not contain the road-surface-arrow-sequence recognition result, it will be processed based on the fourth manner in the case that the current road recognition result contains the lane change event of the target vehicle; otherwise, determining the lane in which the target vehicle is currently located based on the historical lane location result for the target vehicle and the lane number change information at the current location in the case that the current road recognition result contains the lane number change information.

It can be seen that by adopting the above solution, the current lane can be determined based on the lane number change information and the historical lane location result determined by the map application, so as to locate the lane through the map data, ensuring the accuracy of the lane locating.

Using at least one of the above-mentioned plurality of processing manners, the lane in which the target vehicle is currently located can finally be determined. For example, the lane in which the target vehicle is currently located may be as shown in FIG. 2, assuming that FIG. 2 contains lanes No. 1, No.2, and No.3, the lane in which the target vehicle is currently located may be lane No.2, and the lane No.2 is the final current lane location result.

The determination of the current road recognition result based on the image of the current road may be performed on the apparatus with data processing function, or may be performed by the server, or may be executed partly on the apparatus with data processing function and partly by the cloud server.

Wherein, if it is executed by the server, it may include: sending the image of the current road to the server; and receiving the current road recognition result fed back by the server.

Specifically, the current road recognition result may include at least one of: the lane line detection result, the diversion line recognition result, the lane division line recognition result, the road edge recognition result, the road-surface-arrow-sequence recognition result, and the lane change event.

Which of the above is/are contained in the current road recognition result is related to the image of the current road currently collected within the area in which the target vehicle is currently located. For example, in a case that there is no road surface arrow on the actual road surface corresponding to the image of the current road within the currently collected area in which the target vehicle is currently located , then the road-surface-arrow-sequence recognition result may not be contained in the current road recognition result. For another example, in a case that there are road surface arrows on the actual road surface, but due to occlusion and other reasons, the road-surface-arrow-sequence recognition result is not detected in the image of the current road within the currently collected area in which the target vehicle is currently located, then the road-surface-arrow-sequence recognition result may not be contained in the current road recognition result. Or else, there may be other situations, which cause not all the above-mentioned contents in the current road recognition result, but it is not exhaustive here.

It should also be pointed out that, in the case that the computing power of the apparatus with the data processing function is high, the calculation may be executed by the apparatus with the data processing function to obtain the above-mentioned current road recognition result.

Or, in the case that the computing power of the apparatus with data processing function is average or poor, the image of the current road within the area in which the target vehicle is currently located may be directly sent to the cloud server, and all the current road recognition results are obtained by the server. Or, part of the processing can be executed in the apparatus with data processing function, and the remaining recognition is executed by the cloud server. For example, the lane change event and lane line detection result are determined based on the image of the current road in the apparatus with data processing function, and the cloud server determines the remaining recognition results based on the image of the current road, etc.. Here is not an exhaustive list of all possible combinations of processing manners.

In this way, a cloud server can be used to perform calculations to determine the current road recognition result, so that the accuracy of the recognition result can be effectively increased, and the accuracy of locating based on the image of the current road can be improved; in addition, calculation of road recognition results by the cloud server can reduce the occupancy rate of computing resources on the vehicle side, reduce local computing pressure, and make the system more scalable.

According to a second aspect of the present disclosure, the present disclosure provides a vehicle locating apparatus, and it includes:
an image acquisition module 301, configured for acquiring an image of a current road within an area in which a target vehicle is currently located;
a map information acquisition module 302, configured for acquiring current lane related information within the area in which the target vehicle is currently located from a map application;
an engine module 303, configured for determining a current road recognition result based on the image of the current road; and
a synchronous fusion module 304, configured for determining a lane in which the target vehicle is currently located based on at least one of the current road recognition result and the current lane related information, and taking the lane in which the target vehicle is currently located as the current lane location result for the target vehicle.

In an embodiment, the synchronous fusion module 304 is configured for implementing at least one of:
determining the lane in which the target vehicle is currently located based on a lane line detection result and a diversion line recognition result in a case that the current road recognition result contains the diversion line recognition result; and
determining the lane in which the target vehicle is currently located based on the lane line detection result and an opposing-lanes-dividing line recognition result in a case that the current road recognition result contains the opposing-lanes-dividing line recognition result.

In an embodiment, the synchronous fusion module 304 is configured for:
determining a distance between a target lane line and a road edge based on the target lane line and the road edge recognition result in a case that the current road recognition result contains a road edge recognition result; and determining the lane in which the target vehicle is currently located based on the distance between the target lane line and the road edge.

In an embodiment, the synchronous fusion module 304 is configured for determining the lane in which the target vehicle is currently located based on a road-surface-arrow-sequence recognition result and road-surface-arrow-sequence information contained in the current lane related information in a case that the current road recognition result contains the road-surface-arrow-sequence recognition result.

In an embodiment, the synchronous fusion module 304 is configured for determining the lane in which the target vehicle is currently located based on a historical lane location result for the target vehicle and a lane change event of the target vehicle in a case that the current road recognition result contains the lane change event.

In an embodiment, the synchronous fusion module 304 is configured for determining the lane in which the target vehicle is currently located based on a historical lane location result for the target vehicle and a lane number change information at the current location in a case that the current lane related information contains the lane number change information.

In an embodiment, the apparatus further includes:
a communication module 305, configured for sending the image of the current road to a server, and receiving the current road recognition result fed back by the server.

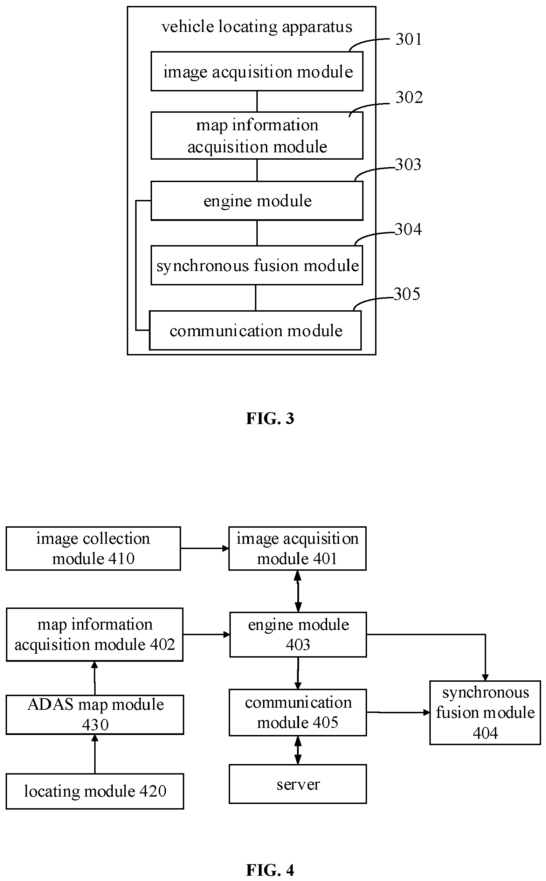

Exemplarily, this embodiment will be described with reference to FIG. 4, in addition to the image acquisition module 401, the map information acquisition module 402, the engine module 403, the synchronous fusion module 404, and the communication module 405 which are the same with the above-mentioned image acquisition module 301, the map information acquisition module 302, the engine module 303, the synchronous fusion module 304, and the communication module 305, the vehicle locating device provided in this embodiment may also include: an image collection module 410, a locating module 420, and an ADAS map module 430 installed on the target vehicle.

In addition, the vehicle locating device may also interact with the server through a communication module as shown in FIG. 4.

Wherein, the image collection module, for example, may be a camera, especially a camera disposed in front of the target vehicle; the server may be a cloud server.

The image collection module 410 is a vehicle-mounted camera that acquires an image of a current road in real time.

Further, the image acquisition module 301 is configured for performing real-time image processing to obtain at least one of the lane line detection result, the road-surface-arrow-sequence recognition result, and the lane change event. The image acquisition module is configured for sending the lane line detection result, the road-surface-arrow-sequence recognition result and the lane change event to the synchronous fusion module.

In addition, the image acquisition module 301 is further configured for generating a corresponding prompt message and sending the prompt message to the engine module when the dashed and solid line of the lane line changes or the road-surface-arrow-sequence recognition result is obtained.

The locating module 420 may acquire the current location of the target vehicle. For example, based on multi-sensor fusion locating, including GPS, IMU, vehicle speed, steering wheel, etc., the location result can be sent to the ADAS map module 430 as the current location of the target vehicle; the ADAS map module 430 sends the current lane related information within the area in which the target vehicle is currently located to the engine module 303 according to the current location. For example, the current lane related information may include road-surface-arrow-sequence information, intersection information, lane number change information, and so on. Here, the contents that the ADAS map module can provide can also include more, such as long solid lane lines, viaduct signals, main and auxiliary road signals, etc., which are not exhaustively listed in this embodiment.

The engine module 303 determines whether or not it requires to request high-precision detection services from the server based on information such as whether the current lane locating has been confirmed, intersection changes, lane number change information, lane line changes in dashed and solid lines, or road-surface-arrow-sequence recognition result.

If it is not required, the corresponding current road recognition result can be determined in the engine module 303, the specific current road recognition result is the same as the foregoing, and the description is not repeated here; and the current road recognition result is sent to the synchronous fusion module 304;

If the high-precision detection service of the server is required, the engine module 303 can control the image of the current road to be sent to the server through the communication module, and the communication module receives the current road recognition result fed back from the server. The communication module 305 sends the received current road recognition result to the synchronous fusion module 304.

The synchronous fusion module 304 determines the lane in which the target vehicle is currently located based on at least one of the current road recognition result and the current lane related information may include at least one of the followings.

The lane in which the target vehicle is currently located is determined based on a lane line detection result and a diversion line recognition result in a case that the current road recognition result contains the diversion line recognition result.

The lane in which the target vehicle is currently located is determined based on the lane line detection result and an opposing-lanes-dividing line recognition result in a case that the current road recognition result contains the opposing-lanes-dividing line recognition result.

The distance between a target lane line and a road edge is determined based on the target lane line and the road edge recognition result in a case that the current road recognition result contains the road edge recognition result; and the lane in which the target vehicle is currently located is determined based on the distance between the target lane line and the road edge. For example, in a case that the road edge recognition result is detected, the distance between the road edge in the road edge recognition result and the target lane line is judged. In a case that the distance between the road edge and the target lane line does not exceed half the lane width, the lane in which the target vehicle is currently located is the outermost lane line, and the lane locating is determined according to this lane line.

The lane in which the target vehicle is currently located is determined based on a road-surface-arrow-sequence recognition result and road-surface-arrow-sequence information contained in the current lane related information in a case that the current road recognition result contains the road-surface-arrow-sequence recognition result. For example, in a case that the road-surface-arrow-sequence recognition result is detected, the road surface arrow sequence in the road-surface-arrow-sequence recognition result is matched with the current road segment arrow sequence given by the ADAS map. In a case that they matches, the locating of the current lane is determined according to the matching result;

The lane in which the target vehicle is currently located is determined based on a historical lane location result for the target vehicle and a lane change event of the target vehicle in a case that the current road recognition result contains the lane change event. For example, in a case that the historical lane location result has been determined and the lane change event is determined to be currently generated, the lane in which the target vehicle is currently located is calculated according to the lane change event.

The lane in which the target vehicle is currently located is determined based on a historical lane location result for the target vehicle and a lane number change information at the current location in a case that the current lane related information contains the lane number change information. For example, in a case that the historical lane location result has been determined, and the ADAS map gives information on the number of lanes at a certain location point (such as the current location) to indicate information on the increase or decrease of the number of lanes on the left/right side of the current location, the lane in which the target vehicle is currently located is determined based on the lane number change information in the case that the target vehicle is located in the current location.

The vehicle locating device provided in this embodiment may be installed in the target vehicle as a module of the target vehicle.

According to the embodiments of the present disclosure, the present disclosure further provides an electronic device, a readable storage medium and a computer program product.

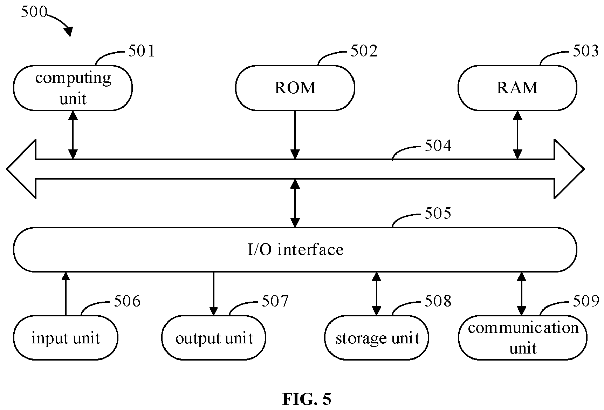

FIG. 5 is a schematic block diagram of an exemplarily electronic device 500 used to implement the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing apparatus. The components shown herein, their connections and relationships, and their functions are by way of example only and are not intended to limit the implementations of the present disclosure described and/or claimed herein.

As shown in FIG. 5, the device 500 includes a computing unit 501, which can perform various appropriate actions and processing based on a computer program stored in a Read-Only Memory (ROM) 502 or a computer program loaded from a storage unit 508 into a Random Access Memory (RAM) 503. In the RAM 503, various programs and data required for the operation of the device 500 can also be stored. The computing unit 501, the ROM 502, and the RAM 503 are connected to each other through a bus 504. An input/output (I/O) interface 505 is also connected to the bus 504.

A plurality of components in the device 500 are connected to the I/O interface 505, including: an input unit 506, such as keyboard, mouse, etc.; an output unit 507, such as various types of displays, speakers, etc.; and a storage unit 508, such as disk, optical disc, etc.; and a communication unit 509, such as network card, modem, wireless communication transceiver, etc. The communication unit 509 allows the device 500 to exchange information/data with other devices through a computer network such as Internet and/or various telecommunication networks.

The computing unit 501 may be various general-purpose and/or special-purpose processing components with processing and computing capabilities. Some examples of the computing unit 501 include but are not limited to Central Processing Unit (CPU), Graphics Processing Unit (GPU), various dedicated Artificial Intelligence (AI) computing chips, various computing units running machine learning model algorithms, Digital Signal Processing (DSP), and any appropriate processor, controller, microcontroller, etc. The computing unit 50 executes the various methods and processes described above, such as the vehicle locating method. For example, in some embodiments, the vehicle locating method may be implemented as a computer software program, which is tangibly contained in a machine-readable medium, such as the storage unit 508. In some embodiments, part or all of the computer programs may be loaded and/or installed on the device 500 via the ROM 502 and/or the communication unit 509. When the computer program is loaded into the RAM 503 and executed by the computing unit 501, one or more operations of the vehicle locating method described above can be executed. Alternatively, in other embodiments, the computing unit 501 may be configured to perform a vehicle locating method through any other suitable means (for example, by means of firmware).

Various implementations of the systems and technologies described herein above can be implemented in digital electronic circuit systems, integrated circuit systems, Field Programmable Gate Arrays (FPGA), Application Specific Integrated Circuits (ASIC), Application-Specific Standard Products (ASSP), System On Chip (SOC), Complex Programmable Logic Device (CPLD), computer hardware, firmware, software, and/or combination(s) thereof. These implementations may include: being implemented in one or more computer programs which can be executed and/or interpreted on a programmable system including at least one programmable processor, the programmable processor can be a special-purpose or general-purpose programmable processor that can receive data and instructions from the storage system, at least one input device, and at least one output device, and transmit the data and instructions to the storage system, the at least one input device, and the at least one output device.

The program code used to implement the method provided by the present disclosure can be written in any combination(s) of one or more programming languages. These program codes can be provided to the processors or controllers of general-purpose computers, special-purpose computers, or other programmable data processing devices, so that the program codes, when executed by the processors or controllers, enable the functions/operations specified in the flowcharts and/or block diagrams to be implemented. The program code can be executed entirely on the machine, or partly executed by the machine, or partly executed by the machine and partly executed by a remote machine as an independent software package, or entirely executed by the remote machine or server.

In the context of the present disclosure, a machine-readable medium may be a tangible medium, which may contain or store a program for use by an instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination(s) of the foregoing. More specific examples of machine-readable storage medium would include electrical connections according to one or more wires, portable computer disks, hard disks, Random Access Memory (RAM), Read-Only Memory (ROM), Erasable Programmable Read-Only Memory (EPROM or flash memory), optical fibers, portable Compact Disk Read-Only Memory (CD-ROM), optical storage device, magnetic storage device, or any suitable combination of the foregoing.

To provide for interaction with a user, the systems and techniques described herein may be implemented on a computer having: a display device (e.g., a Cathode Ray Tube (CRT) or Liquid Crystal Display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: Local Area Networks (LANs), Wide Area Networks (WANs), and the Internet.

The computer system may include a client and a server. The client and the server are typically remote from each other and typically interact through a communication network. A relationship between the client and the server is generated by computer programs operating on respective computers and having a client-server relationship with each other.

It will be appreciated that the various forms of flow, reordering, adding or removing operations shown above may be used. For example, the operations recited in the present disclosure may be performed in parallel or sequentially or may be performed in a different order, so long as the desired results of the technical solutions disclosed in the present disclosure can be achieved, and no limitation is made herein.

The above-mentioned specific embodiments are not to be construed as limiting the scope of the present disclosure. It will be apparent to those skilled in the art that various modifications, combinations, sub-combinations and substitutions are possible, depending on design requirements and other factors. Any modifications, equivalents, and improvements within principles of the present disclosure are intended to be included within the scope of the present disclosure.

## Claims

1. A vehicle locating method, comprising:
acquiring (S101) an image of a current road within an area in which a target vehicle is currently located, and acquiring current lane related information within the area in which the target vehicle is currently located from a map application;
determining (S102) a current road recognition result based on the image of the current road; and
determining (S103) a lane in which the target vehicle is currently located based on at least one of the current road recognition result and the current lane related information, and taking the lane in which the target vehicle is currently located as a current lane location result for the target vehicle.

2. The method of claim 1, wherein the determining (S103) the lane in which the target vehicle is currently located based on at least one of the current road recognition result and the current lane related information, comprises at least one of:
determining the lane in which the target vehicle is currently located based on a lane line detection result and a diversion line recognition result in a case that the current road recognition result contains the diversion line recognition result; and
determining the lane in which the target vehicle is currently located based on the lane line detection result and an opposing-lanes-dividing line recognition result in a case that the current road recognition result contains the opposing-lanes-dividing line recognition result.

3. The method of claim 1, wherein the determining (S103) the lane in which the target vehicle is currently located based on at least one of the current road recognition result and the current lane related information, comprises:
determining a distance between a target lane line and a road edge based on the target lane line and a road edge recognition result in a case that the current road recognition result contains the road edge recognition result; and
determining the lane in which the target vehicle is currently located based on the distance between the target lane line and the road edge.

4. The method of claim 1, wherein the determining (S103) the lane in which the target vehicle is currently located based on at least one of the current road recognition result and the current lane related information, comprises:
determining the lane in which the target vehicle is currently located based on a road-surface-arrow-sequence recognition result and road-surface-arrow-sequence information contained in the current lane related information in a case that the current road recognition result contains the road-surface-arrow-sequence recognition result.

5. The method of claim 1, wherein the determining (S103) the lane in which the target vehicle is currently located based on at least one of the current road recognition result and the current lane related information, comprises:
determining the lane in which the target vehicle is currently located based on a historical lane location result for the target vehicle and a lane change event of the target vehicle in a case that the current road recognition result contains the lane change event.

6. The method of claim 1, wherein the determining (S103) the lane in which the target vehicle is currently located based on at least one of the current road recognition result and the current lane related information, comprises:
determining the lane in which the target vehicle is currently located based on a historical lane location result for the target vehicle and a lane number change information at a current location in a case that the current lane related information contains the lane number change information.

7. The method of any one of claims 1 to 6, wherein the determining (S102) the current road recognition result based on the image of the current road, comprises:
sending the image of the current road to a server; and
receiving the current road recognition result fed back by the server.

8. A vehicle locating apparatus, comprising:
an image acquisition module (301, 401), configured for acquiring an image of a current road within an area in which a target vehicle is currently located;
a map information acquisition module (302, 402), configured for acquiring current lane related information within the area in which the target vehicle is currently located from a map application;
an engine module (303, 403), configured for determining a current road recognition result based on the image of the current road; and
a synchronous fusion module (304, 404), configured for determining a lane in which the target vehicle is currently located based on at least one of the current road recognition result and the current lane related information, and taking the lane in which the target vehicle is currently located as a current lane location result for the target vehicle.

9. The apparatus of claim 8, wherein the synchronous fusion module (304, 404) is configured for performing at least one of:
determining the lane in which the target vehicle is currently located based on a lane line detection result and a diversion line recognition result in a case that the current road recognition result contains the diversion line recognition result; and
determining the lane in which the target vehicle is currently located based on the lane line detection result and an opposing-lanes-dividing line recognition result in a case that the current road recognition result contains the opposing-lanes-dividing line recognition result.

10. The apparatus of claim 8, wherein the synchronous fusion module (304, 404) is configured for:
determining a distance between a target lane line and a road edge based on the target lane line and a road edge recognition result in a case that the current road recognition result contains a road edge recognition result; and
determining the lane in which the target vehicle is currently located based on the distance between the target lane line and the road edge.

11. The apparatus of claim 8, wherein the synchronous fusion module (304, 404) is configured for:
determining the lane in which the target vehicle is currently located based on a road-surface-arrow-sequence recognition result and road-surface-arrow-sequence information contained in the current lane related information in a case that the current road recognition result contains the road-surface-arrow-sequence recognition result.

12. The apparatus of claim 8, wherein the synchronous fusion module (304, 404) is configured for:
determining the lane in which the target vehicle is currently located based on a historical lane location result for the target vehicle and a lane change event of the target vehicle in a case that the current road recognition result contains the lane change event.

13. An electronic device, comprising:
at least one processor; and
a memory communicatively coupled to the at least one processor, wherein
the memory stores instructions executable by the at least one processor to enable the at least one processor to perform the method of any one of claims 1 to 7.

14. A non-transitory computer readable storage medium storing computer instructions for causing a computer to perform the method of any one of claims 1 to 7.

15. A computer program product, comprising a computer program which, when executed by a processor, implements the method of any one of claims 1 to 7.
